# NEUE EUROPÄISCHE PATENTSCHRIFT

(11) **EP 0 170 107 B2**
(45) Veröffentlichungstag und Bekanntmachung des Hinweises auf die Entscheidung über den Einspruch: **01.12.1993**
(45) Hinweis auf die Patenterteilung: 19.11.1987
(21) Anmeldenummer: 85108399.8
(22) Anmeldetag: 06.07.1985
(51) Int. Cl.: B60H 1/00, G05G 7/02

(54) **Bedieneinheit**
Control unit
Unité de commande

(30) Priorität: 01.08.1984 DE 3428331; 19.09.1984 DE 3434302
(43) Veröffentlichungstag der Anmeldung: 05.02.1986
(73) Patentinhaber: Preh-Werke GmbH & Co. KG, 97616 Bad Neustadt (DE)
(72) Erfinder: Bauer, Karl-Heinz, D-8740 Bad Neustadt/Saale (DE); Moret, Reinhold, D-8744 Mellrichstadt (DE)

(56) Entgegenhaltungen:
- DE-A- 1 472 403
- DE-A- 2 026 489
- DE-A- 2 557 077
- FR-A- 1 181 073
- FR-A- 2 335 753
- FR-A- 2 423 815
- US-A- 2 987 984
- PATENTS ABSTRACTS OF JAPAN, Band 4, Nr. 169 (M-43) [651], 21. November 1980

## Beschreibung

Die Erfindung geht von einer Bedieneinheit zum Einstellen von Heizungs-, Klima- und/oder Lüftungsanlagen in Kraftfahrzeugen nach dem Oberbegriff des Anspruches 1 aus.

Derartige in ein Armaturenbrett eines Kraftfahrzeuges einsetzbare Bedieneinheiten werden unter anderem z.B. zum unterschiedlich weiten Öffnen von Verteiler-Klappen von Auslässen für kühle oder warme Luft in vielfach als Klimaanlage bezeichneten Einrichtungen der Kraftfahrzeuge verwendet. Die Betätigung erfolgt hierbei meistens über sogenannte Bowdenzüge.

Eine Einstellvorrichtung mehrerer Funktionen einer Klimaanlage in Kraftfahrzeugen mittels eines einzigen Stellhebels ist aus der DE-A-27 21 497 bekannt. Ein durch einen Schiebeschlitz ragender Stellhebel ist T-förmig ausgebildet, wobei die beiden seitlichen Schenkel in zwei Drehachsen an zwei Lenkhebeln angelenkt sind. Jeder dieser Lenkhebel ist um eine ortsfeste Drehachse angelenkt. Ausserdem ist in jedem Lenkhebel eine Führungsnutvorgesehen, die zum Verstellen eines Betätigungshebels dient. Diese Betätigungshebel sind ihrerseits um ortsfeste Drehachsen schwenkbar gelagert. Ihre Verstellung erfolgt auch die Führung je eines am Betätigungshebel befestigten Querzapfens in diesen Führungsnuten. An den freien Enden der Betätigungshebel sind Bowdenzüge eingehängt.

Es ist ferner aus der DE-A-24 05 321 weitere Vorrichtung zum Betätigen von Bowdenzügen mittels eines Drehknopfes bekannt, bei der in einem Gehäuse ein biegsames Zug- und Druckelement angeordnet ist. Dieses Element befindet sich auf einer im Gehäuse drehbar gelagerten zylindrischen Scheibe, die über einen Mitnehmer mit dem Drehknopf verbunden ist. Ein Ende des Elementes ist an der Scheibe befestigt, während am anderen Ende ein Bowdenzug eingehängt ist. Ausserdem ist das Element in einem den Hub begrenzenden Rohr geführt. Dieses Rohr kann so angeordnet sein, dass der Bowdenzug winkelig oder bogenförmig von dem Gehäuse weggeführt wird. Mit dem gleichen Drehknopf können auch mehrere biegsame Zug- und Druckelemente betätigt werden. Die zugehörigen zylindrischen Scheiben besitzen unterschiedliche Durchmesser, so dass verschiedene Verstellweglängen erreicht werden können.

Ein Drehknopf zum Betätigen eines Bowdenzuges ist bei der Bedieneinheit gemäss der DE-A-31 04 482 vorgesehen. Auch hier ist der Bowdenzug über ein biegsames Zug- und Druckelement mit einer Scheibe bzw. Trommel verbunden. Auf einem Teil ihres Umfanges besitzt die Trommel einen Zahnkranz, dessen Zähne mit den Zähnen des Elementes zusammenwirken. Ausserdem ist das Element einstückig über ein Filmscharnier mit der Scheibe verbunden.

Die FR-A-2 335 753 zeigt ebenfalls eine Vorrichtung zum Betätigen eines Bowdenzuges durch Drehen eines Einstellknopfes. Eine mit dem Drehknopf verbundene Scheibe schwenkt mittels ihres ein oder zweiseitig vorhandenen nutförmigen Führungsmittels einen Hebel senkrecht zur Knopfachse. Am freien Ende des Hebels ist der Bowdenzug eingehängt.

Bei den drei letztgenannten Veröffentlichungen sind die zu betätigenden Bowdenzüge in tangentialer Richtung zur Scheibe bzw. Trommel weggeführt. Es gibt nun auch Fälle, in denen die Bowdenzüge parallel zur Drehachse des Drehknopfes verlaufen müssen. Eine Lösungsmöglichkeit wird in der DE-A-31 36 672 vorgeschlagen. Mit dem Drehknopf wird eine mit einem Schraubengang versehene Trommel gedreht. Parallel zur Trommel verläuft eine Doppelführung. Auf dieser Führung gleitet ein Gleitstück, das über einen Gleitstift in den Schraubengang der Trommel eingreifend beim Drehen des Drehknopfes mitgeführt wird. Die Schraubengänge können sowohl gleichförmige als auch unterschiedliche Steigungen aufweisen. Am Gleitstift selbst ist eine Befestigungseinrichtung für den Bowdenzug vorgesehen.

Es ist ferner eine Bedieneinheit bekannt, die aus einem Grundkörper besteht. In der Frontplatte dieses Grundkörpers ist ein erstes Kegelrad. Hinter der Frontplatte befindet sich ein rückwärtiges Trägerelement in Form eines Rahmens. In diesem Rahmen ist ein zweiarmiger, einstückiger, flacher und plattenförmiger Hebel drehbar, dessen einer Arm endseitig in einem Kreissegment einen Zahnkranz als eine Art zweites Kegelrad aufweist, dessen Zähne in die Zähne des ersten Kegelrades eingreifen. Am Ende des anderen Armes ist ein Bowdenzug eingehängt. Da der Hebel einstückig ausgeführt ist, ist nur eine lineare Bewegung des Bowdenzuges möglich. Darüber hinaus besteht nicht die Möglichkeit den Drehknopf durchdrehend zu machen.

In der US-PS 2 987 984 ist eine Einrichtung zur Einstellung eines Klimageräts beschrieben. Diese weist einen Träger auf, an dem zwei Kronenräder mit zueinander senkrechten Drehachsen gelagert sind. Der Träger ist hinter einer Frontplatte montierbar, so daß eine Welle des ersten Kronenrades durch eine Frontplatte ragt. Am zweiten Kronenrad sind sich jeweils über etwa 180° erstreckende Führungsschlitze ausgebildet. In jeden Führungsschlitz greift ein Stellhebel für einen Bowdenzug ein. Beide Stellhebel greifen von der gleichen Seite in die Führungsschlitze. Die Stellhebel bzw. Bowdenzüge sind auf unterschiedlichen Verstellwegen verstellbar. Die Gestaltungsfreiheit der Verstellmöglichkeiten ist jedoch eingeschränkt.

Aufgabe der vorliegenden Erfindung ist es, eine Bedieneinheit nach der im voraus gehenden Absatz genannten Art mit konstruktiv einfachen Mitteln derart zu gestalten, dass mit einem auf einen bestimmten Drehbereich begrenzten oder durchdrehbaren Drehknopf mehr als ein in etwa Parallelrichtung zur Drehknopfachse geführter Bowdenzug betätigt werden kann, wobei die Bowdenzüge voneinander unabhängige, verschiedene und sowohl lineare als auch nicht lineare Verstellwege besitzen.

Diese Aufgabe wird erfindungsgemäss durch die im Kennzeichnungsteil des Anspruches 1 angegebenen Merkmale gelöst.

Vorteilhafte Ausgestaltungen ergeben sich aus den Unteransprüchen.

Eine derart gestaltete Bedieneinheit ist leicht an die gewünschten Forderungen anzupassen, da lediglich im zweiten Kegelrad die entsprechenden Vorkehrungen getroffen werden müssen. Ausserdem ist es leicht möglich, die Stellung des Drehknopfes durch eine thermometerskalaähnliche Beleuchtung zusätzlich anzeigen zu können. Ferner kann, unabhängig vom Hub des Bowdenzuges, dessen Winkelauslenkung klein gehalten werden. Da der Hebel relativ lang ist, ist auch die Übertragung grösserer Kräfte möglich.

Die Erfindung wird nachfolgend für mehrere Ausführungsbeispiele anhand der Zeichnungen näher beschrieben. wobei nur die Ausführungen die Erfindung zeigen, welche an beiden Seiten des Radkörpers eine Führungsnut aufweisen.

Von den Figuren zeigt
Figur 1 in Perspektivansicht eine Bedieneinheit von vorne und von der Seite, teilweise aufgebrochen,
Figur 2 in Perspektivansicht die Bedieneinheit von hinten,
Figur 3 in Perspektivansicht eine andere Bedieneinheit von hinten,
Figur 4 in perspektivischer Ansicht ein getriebenes Kegelrad,
Figur 5 in perspektivischer Ansicht ein weiteres getriebenes Kegelrad,
Figur 6 im Schnitt in Seitenansicht eine weitere Bedieneinheit, teilweise abgebrochen.

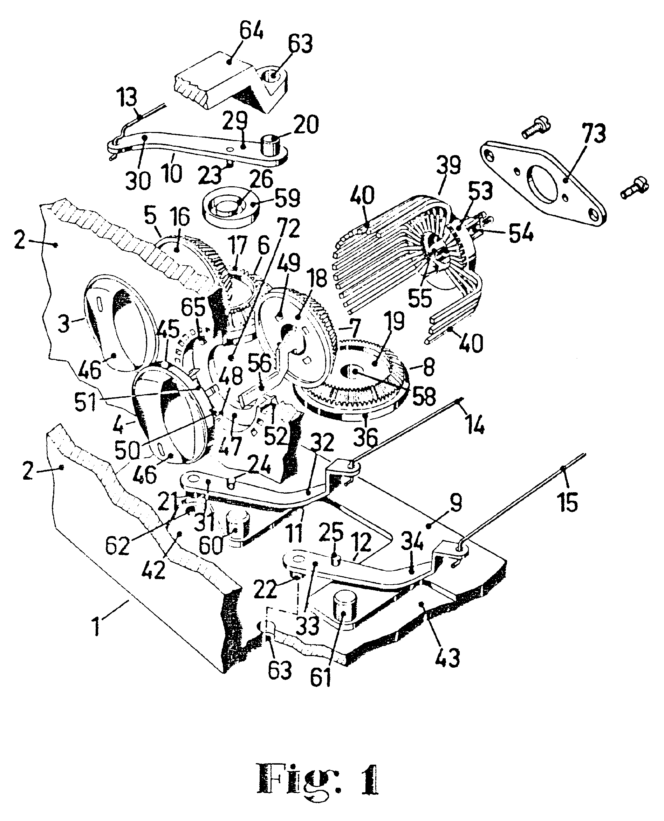

In Figur 1 ist mit 1 der Grundkörper einer Bedieneinheit bezeichnet, die zum Einstellen von Heizungs-, Klima- und/oder Lüftungsanlagen in Kraftfahrzeugen dient, wobei der Grundkörper 1 in ein in Figur 1 nicht dargestelltes Armaturenbrett eingesetzt und z.B. mittels Schrauben festgehalten werden kann. Diese Bedieneinheit besteht aus einem im Schnitt L-förmigen Grundkörper 1 aus Kunststoff mit einer vorderen Frontplatte 2 und einem etwa im rechten Winkel dazu angeordneten Trägerelement 9. Frontplatte und Trägerelement sind zweckmässigerweise einstückig ausgebildet.

In der Frontplatte 2 sind mehrere, in den Figuren dargestellt sind zwei, Drehknöpfe 3,4 drehbar gelagert. Die Anzahl der Drehknöpfe ist für die Erfindung jedoch ohne Bedeutung. Jeder Drehknopf 3, 4 besteht aus einem scheibenförmigen Basisteil 45, an das ein sich nahezu über den ganzen Durchmesser erstreckendes Griffstück 46 angeformt ist. In der Frontplatte 2 ist eine kreisförmige Mulde 47 ausgespart, die das Basisteil 45 des Drehknopfes aufnehmen soll. Die Tiefe der Mulde 47 ist zweckmässigerweise an die Dicke des Basisteils 45 angepasst, so dass nur das Griffstück 46 aus der Fläche der Frontplatte 2 hervorsteht.

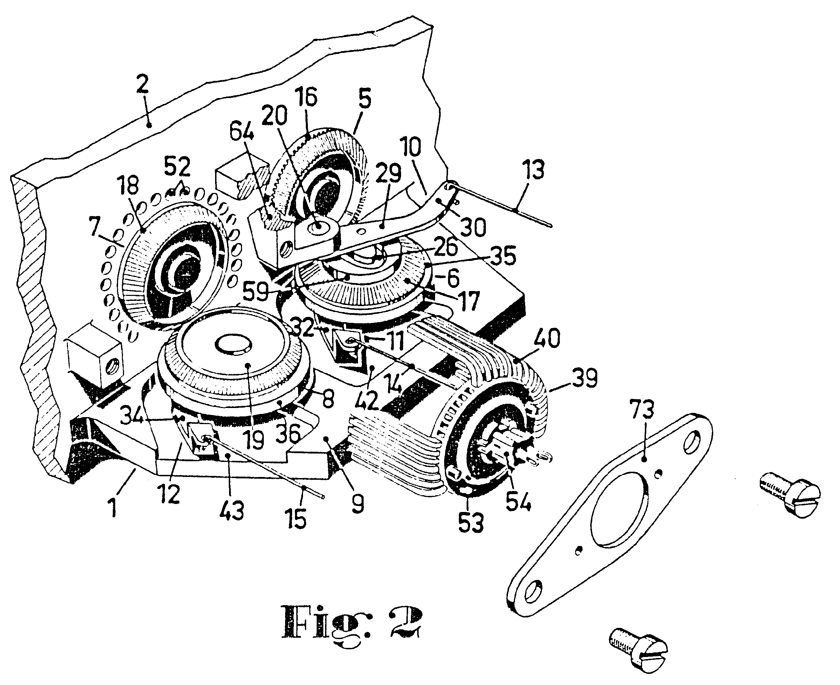

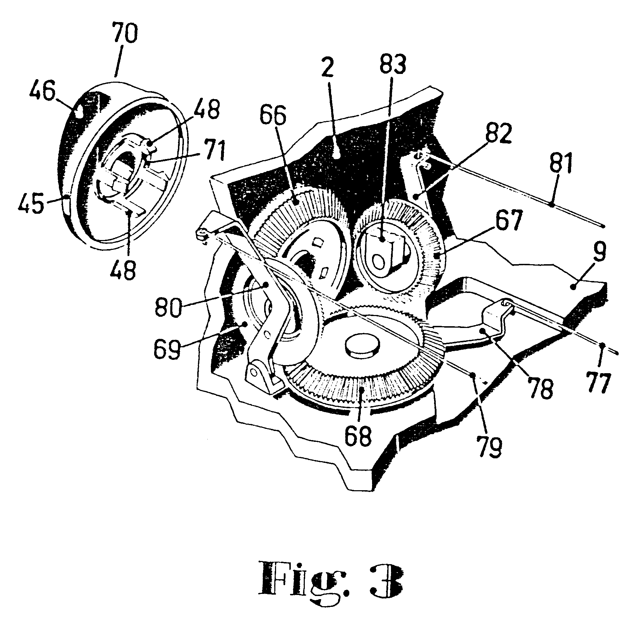

Auf der dem Griffstück 46 gegenüberliegenden Seite sind an das Basisteil 45 am Umfang gleichmässig verteilt vier Schnapphaken 48 angeformt, die mit Höhlungen 49 in dem dem Drehknopf zugeordneten Kegelrad im Sinne einer Snap-in-Verbindung zusammenwirken. Die Schnapphaken 48 sind an einem Ringansatz 71 angeformt, der sich zentrisch um die Drehachse des Drehknopfes 3 herum erstreckt. Ersichtlich ist dies aus Figur 3. Mit diesem Ringansatz 71 ist der Drehknopf 3, 4 oder 70 in der Frontplatte drehbar geführt.

Wie aus Figur 1 bei dem rechten Drehknopf 4 zu entnehmen ist, befindet sich in der Mulde 47 eine vorstehend angeformte Nase 65, die als Anschlag für den Drehknopf dient. Diese Nase 65 ragt in einen umfangseitig am Rand des Basisteils 45 verlaufenden, ringförmigen Ausschnitt 50. Der Ausschnitt ist lediglich durch einen Steg 51 unterbrochen. Die Länge des Steges wird durch den gewünschten Drehbereich des Drehknopfes bestimmt. Soll der Drehknopf durchdrehend sein, so entfällt selbstverständlich die Nase 65.

Bei dem in Figur 1 dargestellten rechten Drehknopf 4 ist eine Stellungsanzeige vorgesehen. Hierbei wird die Stellung des Drehknopfes durch eine thermometerskalaähnliche Anzeige veranschaulicht. Diese besteht aus mehreren kreisförmig um den Drehknopf 4 angeordneten Einzellichtleitern 40, deren Enden in Durchbrüchen 52 der Frontplatte 2 sichtbar sind. Die Länge des aus Einzelleuchtpunkten bestehenden Bandes richtet sich nach dem gewünschten Drehbereich.

Die Einzellichtleiter 40 kommen von einem mittels eines Bügels 73 durch Schrauben auf der Rückseite der Frontplatte 2 befestigten Leuchtzentrum 39, das aus einem Fassungskörper 53 aus Kunststoff besteht, in dem die Einzellichtleiter 40 gehalten sind. In den Fassungskörper 53 eingesetzt oder an ihm angeformt ist die Lampenfassung 54, in die eine Lichtquelle 55 eingesetzt werden kann. Das Licht der Lichtquelle 55 trifft noch auf einen Lichtleiter 56, der selbstverständlich ebenfalls aus einem lichtleitenden Material hergestellt ist. Dieser Lichtleiter ist mehrfach abgewinkelt durch das Kegelrad 7 und durch das Basisteil 45 des Drehknopfes hindurch zum Griffstück geführt. Das Ende ist dann im Griffstück sichtbar. Zusammen mit dem thermometerskalaähnlichen Anzeigeband ist damit eine gute Stellungsanzeige des Drehknopfes 4 gegeben. In ähnlicher Weise, allerdings ohne Skalaanzeige, könnte auch ein weiterer Lichtleiter vom Leuchtzentrum 39 aus zu dem Griffstück des Drehknopfes 3 geführt sein.

Mit jedem Drehknopf wird ein Kegelradgetriebe angetrieben, das aus mindestens zwei Kegelrädern besteht. Die Drehachsen stehen, wie aus Figur 1 hervorgeht, in einem rechten Winkel zueinander. Direkt mit dem Drehknopf 3 verbunden ist ein erstes treibendes Kegelrad 5, das sich auf der Rückseite der Frontplatte 2 befindet. Mit diesem Kegelrad 5 wird das zweite Kegelrad 6 angetrieben, das am Trägerelement drehbar gelagert ist. Das Drehlager besteht aus einem an das Trägerelement angeformten Drehlagerzapfen 60, der in eine Öffnung 57 des zweiten Kegelrades 6 eintaucht.

Das zweite Kegelrad 6 selbst besteht im wesentlichen aus dem eigentlichen Radkörper 17, der umfangseitig den Zahnkranz aufweist. Auf der Seite, mit der der Radkörper auf dem Trägerelement aufliegt, besitzt der Radkörper einen scheibenförmigen Ansatz 35, der entweder mit angeformt ist oder der als Zusatzteil in den Radkörper eingesetzt werden kann. In diesem Ansatz 35 ist eine in sich geschlossene, umlaufende Führungsnut 27 ausgespart. Der Verlauf der Führungsnut wird durch den Weg bestimmt, den der dazugehörige Bowdenzug 14 bei Drehung des Drehknopfes 3 machen muss. Der Weg kann linear oder auch nichtlinear sein. Da die Führungsnut in sich geschlossen ist, ist der Drehknopf durchdrehbar. In der Führungsnut 27 wird ein zweiter Führungszapfen 24 geführt, der an dem zweiten Stellhebel 11 angeformt ist.

Dieser zweite Stellhebel 11 besteht aus zwei miteinander verbundenen Abschnitten 31, 32, die in einem stumpfen Winkel zueinander stehen. Der Führungszapfen 24 ist im ersten Abschnitt 31 angeordnet. Im gleichen Abschnitt ist auf der anderen, gegenüberliegenden Seite der zweite Drehzapfen 21 vorgesehen, der in ein Loch 62 im Trägerelement hineinragt. Dies stellt das Drehlager für den Stellhebel 11 dar. Am freien, anderen Ende des Stellhebels 11 ist im zweiten Abschnitt 32 ein zweiter Bowdenzug 14 eingehängt. Mit Hilfe dieses Bowdenzuges kann z.B. eine Lüfterklappe betätigt werden.

Ein erster Bowdenzug 13 wird, wie aus Figur 2 ersichtlich ist, durch den ersten Stellhebel 10 bewegt, der ebenfalls mit dem gleichen Drehknopf 3 betätigt wird. Hierzu ist auf der dem Ansatz 35 gegenüberliegenden Seite des Radkörpers 17 ein Einsatz 59 vorgesehen, der in den Radkörper eingesetzt oder auch angeformt sein kann. In diesen Einsatz ist eine erste Führungsnut 26 ausgespart, die in sich geschlossen ist. Die erste Führungsnut 26 hat einen derartigen Verlauf, dass eine lineare oder auch nichtlineare Bewegung des Bowdenzuges 13 bewirkt wird. Sowohl die erste Führungsnut 26 als auch die zweite Führungsnut 27 können beide gleich verlaufen oder sie können auch voneinander unterschiedliche Kurvenformen aufweisen.

Geführt wird der erste Stellhebel 10 durch seinen angeformten ersten Führungszapfen 23, der in die erste Führungsnut 26 eintaucht. Der Stellhebel 10 besteht aus zwei miteinander in einem stumpfen Winkel verbundenen Abschnitten 29 und 30. Auf der dem Führungszapfen 23 gegenüberliegenden Seite des ersten Abschnittes ist ein angeformter erster Drehzapfen 20 vorgesehen, der in einem Loch 63 eines Auslegers 64 drehbar gelagert ist. Dieser Ausleger 64 ist auf der Rückseite der Frontplatte 2 angebracht oder einstückig angeformt. An ihm ist auch der Bügel 73 auf einer Seite befestigt. Am gegenüberliegenden Ende des zweiten Abschnittes 30 ist wieder ein Bowdenzug 13 eingehängt.

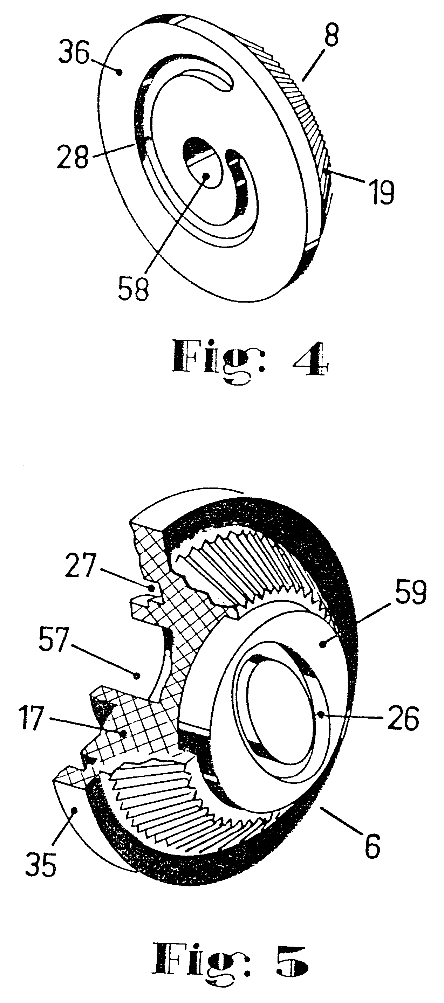

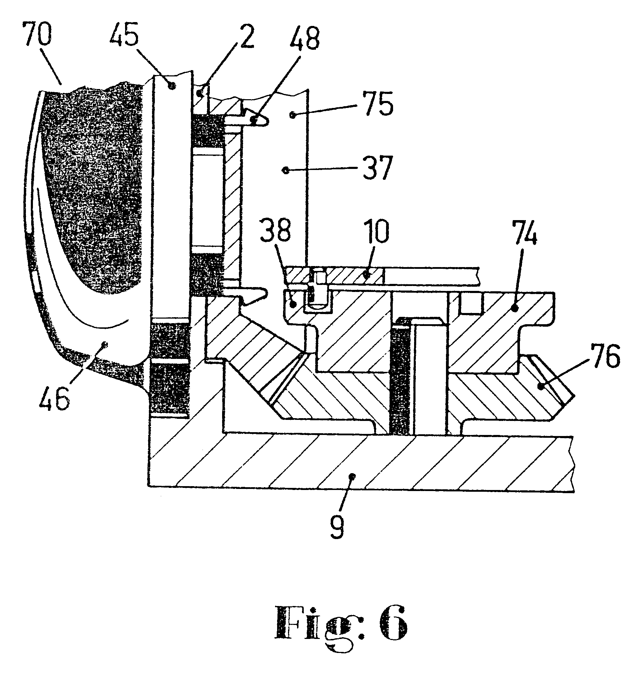

Wie aus Figur 1 ersichtlich ist, liegt die erste Führungsnut 26 des Einsatzes 59 innerhalb des Zahnkranzes des Radkörpers 17. Möchte man hingegen eine grössere Schwenkung des Stellhebels 10, so könnte man den Einsatz 74, wie Figur 6 zeigt, mit einem über den Zahnkranz hinausgehenden Überhang 38 versehen, der in eine Vertiefung 37 im ersten Kegelrad eintaucht. Aus Figur 1 ist ferner zu entnehmen, dass die Drehachse des Stellhebels 10 von der Drehachse des zweiten Kegelrades 6 beabstandet ist.

Das Trägerelement 9 ist mit zwei ineinander übergehenden Aussparungen 42 und 43 versehen. Die Tiefe dieser Aussparungen ist dabei so gewählt, dass die Stellhebel 11 und 1 2 sich darin frei bewegen können. Das zweite und das dritte Kegelrad 7 und 8 liegen mit dem jeweiligen Ansatz 35 bzw. 36 auf dem Trägerelement auf und überdecken die Aussparungen 42 und 43 teilweise.

Während der Drehknopf 3 durchdrehend ist, besitzt der Drehknopf 4, wie bereits erwähnt, einen Anschlag in Form der Nase 65, die in dem Ausschnitt 50 des Basisteils 45 läuft. Entsprechend dem Anschlag ist auch die dritte Führungsnut 28 nicht in sich geschlossen, sondern in ihrer Länge begrenzt. Wie eine derartige Führungsnut aussehen kann, zeigt Figur 4. Die Führungsnut ist hierbei so gestaltet, dass sie einen nichtlinearen Verlauf des Bowdenzuges bewirkt, d.h., dass der radiale Abstand zur Drehachse entsprechend dem gewünschten Kurvenverlauf unterschiedlich ist. Wenn der radiale Abstand gleich bleibt, so liegt ein linearer Kurvenverlauf vor.

Wie aus Figur 4 noch zu entnehmen ist, besitzt der Radkörper 19 zentrisch eine Öffnung 58. In diese Öffnung 58 ragt der Drehzapfen 61, der am Trägerelement 9 angeformt oder eingesetzt ist. Dieser Drehzapfen bildet das Drehlager für das getriebene Kegelrad 8.

In der Führungsnut 28 geführt ist der dritte Führungszapfen 25, der an dem dritten Stellhebel 1 2 befestigt oder einfacher mit angeformt ist. Auf der dem Führungszapfen gegenüberliegenden Seite des Stellhebels ist ein dritter Drehzapfen 22 vorgesehen, der in ein Loch 63, das sich in dem Trägerelement 9 befindet, derart hineinragt, dass der Stellhebel darin drehbar gelagert ist.

Ebenso wie die Stellhebel 10 und 11 besteht der Stellhebel 12 aus zwei Abschnitten, dem ersten Abschnitt 33 und dem zweiten Abschnitt 34, die, wie Figur 1 zeigt, in einem stumpfen Winkel zueinander stehen. Am Ende des zweiten Abschnittes ist am freien Ende ein Bowdenzug 15 eingehängt. Drehzapfen 22 und Führungszapfen 25 sind voneinander beabstandet, befinden sich aber im selben ersten Abschnitt 33 des Stellhebels. Aus Figur 1 ist ferner ersichtlich, dass die Drehachse der Stellhebel von der Drehachse des zugeordneten Kegelrades beabstandet ist.

Ein bereits erwähntes anderes Ausführungsbeispiel ist in Figur 6 dargestellt. Um einen grösseren Schwenkweg des Stellhebels 10 zu erhalten, besitzt der Einsatz 74 einen über den Zahnkranz hinausreichenden Überhang 38. Dieser Überhang 38 ragt in eine Vertiefung 37 des treibenden Kegelrades 75. Die Zähne dieses Kegelrades 75 stehen mit den Zähnen des getriebenen Kegelrades 76 im Eingriff. Der Einsatz 74 kann auch einstückig mit dem Kegelrad 76 verbunden sein. Wie aus Figur 6 zu entnehmen ist, ist auch hier der Drehknopf 70 durch Schnappzungen 48 an der Frontplatte 2 gehaltert.

Der gleiche Drehknopf 70 wird auch bei einem anderen Ausführungsbeispiel gemäss Figur 3 verwendet. Bei den vorstehend beschriebenen Beispielen hat ein treibendes Kegelrad ein getriebenes Kegelrad angetrieben. Damit können bis zu zwei Bowdenzüge in bestimmten Grenzen unabhängig voneinander verstellt werden. Sollen mehr als zwei Bowdenzüge verstellt werden, so müssen mehr Kegelräder eingesetzt werden. Figur 3 zeigt hierzu ein Beispiel, das keinesfalls den Anspruch erheben will, alle Ausführungsmöglichkeiten aufzuzeigen. Es ist auch hier eine Frontplatte 2 und ein Trägerelement 9 vorhanden. Durch den Drehknopf 70 wird das treibende Kegelrad 66 gedreht. Auf dem Trägerelement ist in der bereits beschriebenen Weise ein zweites Kegelrad 68 drehbar gelagert.

Mit Hilfe dieses Kegelrades 68 kann ein oder zwei Bowdenzüge verstellt werden. In Figur 3 ist beispielsweise nur ein Bowdenzug 77 mit seinem zugehörigen Stellhebel 78 dargestellt. Ferner sind zwei weitere getriebene Kegelräder 67 und 68 vorgesehen, deren Drehachsen parallel zueinander aber senkrecht zu den Drehachsen der anderen beiden Kegelräder stehen. Mit dem Kegelrad 67 wird der Stellhebel 82 bewegt, an dem der Bowdenzug 81 eingehängt ist. In gleicher Weise bewegt das Kegelrad 69 den Stellhebel 80, an dem der Bowdenzug 79 befestigt ist. Die Drehlager für die Stellhebel 80 und 82 befinden sich unten an dem Trägerelement, während das Drehlager für das Kegelrad 67 an einem Ausleger 83 vorgesehen ist. In gleicher Weise ist auch Kegelrad 69 drehbar gelagert. Der Ausleger 83 ist, ähnlich wie der Ausleger 64 des ersten Ausführungsbeispiels, an der Rückseite der Frontplatte 2 mit angeformt. Zweckmässigerweise wird man den Drehknopf 70 durchdrehend machen, da ein Drehknopf mit Anschlag gleichzeitig den Hub aller Bowdenzüge begrenzen würde.

### Bezugszeichenliste

- 1: Grundkörper
- 2: Frontplatte
- 3: erster Drehknopf
- 4: zweiter Drehknopf
- 5: erstes Kegelrad (treibend)
- 6: zweites Kegelrad (getrieben)
- 7: drittes Kegelrad (treibend)
- 8: viertes Kegelrad (getrieben)
- 9: Trägerelement
- 10: erster Stellhebel
- 11: zweiter Stellhebel
- 12: dritter Stellhebel
- 13: erster Bowdenzug
- 14: zweiter Bowdenzug
- 15: dritter Bowdenzug
- 16: Radkörper des ersten Kegelrades
- 17: Radkörper des zweiten Kegelrades
- 18: Radkörper des dritten Kegelrades
- 19: Radkörper des vierten Kegelrades
- 20: erster Drehzapfen
- 21: zweiter Drehzapfen
- 22: dritter Drehzapfen
- 23: erster Führungszapfen
- 24: zweiter Führungszapfen
- 25: dritter Führungszapfen
- 26: erste Führungsnut
- 27: zweite Führungsnut
- 28: dritte Führungsnut
- 29: erster Abschnitt des ersten Stellhebels
- 30: zweiter Abschnitt des ersten Stellhebels
- 31: erster Abschnitt des zweiten Stellhebels
- 32: zweiter Abschnitt des zweiten Stellhebels
- 33: erster Abschnitt des dritten Stellhebels
- 34: zweiter Abschnitt des dritten Stellhebels
- 35: Ansatz im zweiten Kegelrad
- 36: Ansatz im zweiten Kegelrad
- 37: Vertiefung
- 38: Überhang
- 39: Leuchtzentrum
- 40: Einzellichtleiter
- 42: erste Aussparung
- 43: zweite Aussparung
- 45: Basisteil
- 46: Griffstück
- 47: Mulde
- 48: Schnapphaken
- 49: Höhlung
- 50: Ausschnitt
- 51: Steg
- 52: Durchbruch
- 53: Fassungskörper
- 54: Lampenfassung
- 55: Lichtquelle
- 56: Lichtleiter
- 57: erste Öffnung
- 58: zweite Öffnung
- 59: Einsatz
- 60: Drehlagerzapfen
- 61: Drehlagerzapfen
- 62: Loch
- 63: Loch
- 64: Ausleger
- 65: Nase
- 66: erstes Kegelrad (treibend)
- 67: zweites Kegelrad (getrieben)
- 68: zweites Kegelrad (getrieben)
- 69: zweites Kegelrad (getrieben)
- 70: Drehknopf
- 71: Ringansatz
- 72: Ausnehmung
- 73: Bügel
- 74: Einsatz
- 75: Kegelrad
- 76: Kegelrad
- 77: Bowdenzug
- 78: Stellhebel
- 79: Bowdenzug
- 80: Stellhebel
- 81: Bowdenzug
- 82: Stellhebel
- 83: Ausleger

## Patentansprüche

1. Bedieneinheit zum Einstellen von Heizungs-, Klima- und/oder Lüftungsanlagen in Kraftfahrzeugen mit einem in ein Armaturenbrette einsetzbaren Grundkörper(1), bestehend
- aus einer vorderen Frontplatte(2), in der mindestens ein Drehknopf(3,4) drehbar gelagert ist, mit dessen Hilfe ein erstes treibendes Kegelrad(5,7) eines aus mindestens zwei Kegelrädern(5,6,7,8) mit senkrecht aufeinander stehenden Drehachsen bestehendes Kegelradgetriebe drehbar ist, und
- aus einem rückwärtigen Trägerelement(9), in dem das zweite getriebene Kegelrad(6,8) drehbar gelagert ist, wobei das zweite Kegelrad(6,8) mit einem in einem Drehlager im Grundkörper(1) um einen begrenzten Winkelbereich schwenkbaren Stellhebel(10,11,12) zur Betätigung von Bowdenzügen(13,14,15) im Sinne einer Mitnahme zusammenwirkt,
dadurch gekennzeichnet,
daß das zweite Kegelrad(6,8) mindestens zwei Führungsmittel am Radkörper(17,19) für die Mitnahme jeweils eines Stellhebels(10,11,12) aufweist,
wobei die Führungsmittel aus jeweils einer im Radkörper (17,19) eingearbeiteten Führungsnut(26,27,28) bestehen und
wobei jeder Stellhebel (10,11,12) einen Führungszapfen(23,24,25) aufweist, der mit der Führungsnut(26,27,28) zusammenwirkt,
und die Drehachse des Stellhebels(10,11,12) zu der Drehachse des zweiten Kegelrades(6,8) beabstandet ist,
daß die Führungsnuten und die Stellhebel(10,11,12) derart gestaltet sind, daß bei der Drehung des Drehknopfes(3,4) das zweite Kegelrad(6,8) die Bowdenzüge(13, 14,15) auf voneinander unabhängigen, verschiedene Verstellwegen antreibt
und daß an beiden Seiten des Radkörpers eine der Führungsnuten(26,27,28) vorgesehen ist.

2. Bedieneinheit nach Anspruch 1,
dadurch gekennzeichnet,
dass jeder Stellhebel (10,11,12) ein einarmiger Hebel ist, der an einem Ende mit einem Drehzapfen (20, 21, 22) in dem Drehlager des Grundkörpers (1) schwenkbar gelagert ist, der an seinem anderen, freien Ende den eingehängten Bowdenzug (13, 14, 15) trägt und der dazwischenliegend den Führungszapfen (23, 24, 25) aufweist.

3. Bedieneinheit nach einem der Ansprüche 1 bis 2,
dadurch gekennzeichnet,
dass jeder Stellhebel (10, 11, 12) mindestens zwei Abschnitte (29 bis 34) besitzt, die in einem Winkel zueinander stehen.

4. Bedieneinheit nach Anspruch 3, dadurch gekennzeichnet, dass der Winkel ein stumpfer Winkel ist.

5. Bedieneinheit nach Anspruch 3, dadurch gekennzeichnet, dass der Winkel etwa ein rechter Winkel ist.

6. Bedieneinheit nach Anspruch 3, dadurch gekennzeichnet, dass sich Drehzapfen (20, 21, 22) und Führungszapfen (23, 24, 25) in einem Abschnitt (29, 31, 33) befinden.

7. Bedieneinheit nach Anspruch 1, dadurch gekennzeichnet, dass der Führungszapfen (23, 24, 25) jedes Stellhebels (10, 11, 12) im Gleitsitz in seine Führungsnut (26, 27, 28) eingreift.

8. Bedieneinheit nach Anspruch 7, dadurch gekennzeichnet, dass die Führungsnut (26, 27) in sich geschlossen ist.

9. Bedieneinheit nach Anspruch 8, dadurch gekennzeichnet, dass die Führungsnut (26, 27) von der Drehachse des zweiten Kegelrades (6, 8) in radialer Richtung gesehen einen veränderlichen Abstand besitzt.

10. Bedieneinheit nach Anspruch 7, dadurch gekennzeichnet, dass die Führungsnut (28) offen und mit einem beidseitigen Anschlag versehen ist.

11. Bedieneinheit nach Anspruch 7, dadurch gekennzeichnet, dass der Radkörper (17) des zweiten Kegelrades (6) ein- oder beidseitig einen angeformten, scheibenförmigen Ansatz (35, 36) aufweist, in den die Führungsnut (26, 27) eingearbeitet ist.

12. Bedieneinheit nach einem der Ansprüche 1 bis 11, dadurch gekennzeichnet, dass das erste Kegelrad (5) im Bereich seines Zahnkranzes im Radkörper (16) eine Vertiefung (37) besitzt, in die ein Überhang (38) eines Ansatzes (35) des zweiten Kegelrades (6) eintaucht.

13. Bedieneinheit nach einem der Ansprüche 1 bis 12, dadurch gekennzeichnet, dass der Drehknopf (3, 4) mit dem ersten Kegelrad (5, 7) durch eine Snap-in-Verbindung verbunden ist.

14. Bedieneinheit nach Anspruch 1, dadurch gekennzeichnet, dass das erste Kegelrad (7) bis auf einen Bereich, in dem die Zähne des ersten Kegelrades (7) mit den Zähnen des zweiten Kegelrades (8) in Eingriff stehen, umfangseitig von von einem Leuchtzentrum (39) ausgehenden Einzellichtleitern (40) umgeben ist, deren Enden Kreisförmig um den Drehknopf (3) angeordnet in der Frontplatte (2) sichtbar sind.

15. Bedieneinheit nach Anspruch 14, dadurch gekennzeichnet, dass von dem Leuchtzentrum (39) aus mindestens ein Lichtleiter zu einem weiteren Drehknopf geführt ist.

16. Bedieneinheit nach einem der Ansprüche 1 bis 15, dadurch gekennzeichnet, dass das plattenförmige Trägerelement (9) eine Aussparung (42, 43) besitzt, innerhalb der der Stellhebel (11, 12) schwenkbar ist.

17. Bedieneinheit nach einem der Ansprüche 1 bis 16, dadurch gekennzeichnet, dass der Radkörper (17, 19) des zweiten Kegelrades (6, 8) mit seinem unteren Ansatz (36) auf dem plattenförmigen Trägerelement (9) aufliegt.

18. Bedieneinheit nach einem der Ansprüche 1 bis 17, dadurch gekennzeichnet, dass sich das Drehlager für den der Führungsnut (26) im oberen Ansatz (35) zugeordneten Stellhebel (10) in einem an die Frontplatte (2) rückseitig befestigten Haltebügel befindet.

19. Bedieneinheit nach einem der Ansprüche 1 bis 11, 13, 16, 17, dadurch gekennzeichnet, dass das Kegelradgetriebe aus einem ersten treibenden Kegelrad (66) und mehreren zweiten getriebenen Kegelrädern (67, 68, 69) besteht.

## Claims

1. Operating unit for controlling heating, air- conditioning and/or ventilating systems in motor vehicles having a basic body (1) which may be inserted into a dashboard and consists of a forward front panel (2), in which there is rotatably mounted at least one turning knob (3, 4) with the aid of which may be turned a first driving bevel wheel (5, 7) of a bevel gearing consisting of at least two bevel wheels (5, 6, 7, 8) with axes of rotation perpendicular to each other, and a rearward support element (9) in which the second driven bevel wheel (6, 8) is rotatably mounted, the second bevel wheel (6, 8) cooperating with, in the sense of carrying along, an adjusting lever (10, 11, 12) which may be swung in a pivot bearing in the basic body (1) about a limited angular range, for the actuation of Bowden cables (13, 14, 15), characterised in that the second bevel wheel (6, 8) has at least two guide means on the wheel body (17, 19) for carrying along a respective adjusting lever (10, 11, 12), in which case the guide means consist of a respective guide groove (26, 27, 28) formed in the wheel body (17, 19) and each adjusting lever (10, 11, 12) has a guide pin (23, 24, 25) which cooperates with the guide groove (26, 27, 28), and the axis of rotation of the adjusting lever (10, 11, 12) is at a distance from the axis of rotation of the second bevel wheel (6, 8), in that the guide grooves and the adjusting levers (10, 11, 12) are formed in such a way that in the case of rotation of the turning knob (3, 4) the second bevel wheel (6, 8) moves the Bowden cables (13, 14, 15) on various shift paths which are independent of each other and in that one of the guide grooves (26, 27, 28) is provided on both sides of the wheel body.

2. Operating unit according to claim 1, characterised in that each adjusting lever (10, 11, 12) is a one-armed lever which is pivotally mounted at one end with a pivot pin (20, 21, 22) in the pivot bearing of the basic body (1), supports at its other, free, end the suspended Bowden cable (13, 14, 15) and has, lying in between, the guide pin (23, 24, 25).

3. Operating unit according to one of the claims 1 to 2, characterised in that each adjusting lever (10, 11, 12) has at least two sections (29 to 34) which are at an angle to one another.

4. Operating unit according to claim 3, characterised in that the angle is an obtuse angle.

5. Operating unit according to claim 3, characterised in that the angle is substantially a right angle.

6. Operating unit according to claim 3, characterised in that pivot pins (20, 21, 22) and guide pins (23, 24, 25) are located in one section (29, 31, 33).

7. Operating unit according to claim 1, characterised in that the guide pin (23, 24, 25) of each adjusting lever (10, 11, 12) engages into its guide groove (26, 27, 28) with a sliding fit.

8. Operating unit according to claim 7, characterised in that the guide groove (26, 27) is closed upon itself.

9. Operating unit according to claim 8, characterised in that the guide groove (26, 27) is at a variable distance from the axis of rotation of the second bevel wheel (6, 8), viewed in the radial direction.

10. Operating unit according to claim 7, characterised in that the guide groove (28) is open and provided with a stop on both sides.

11. Operating unit according to claim 7, characterised in that the wheel body (17) of the second bevel wheel (6) has on one or both sides a pre-formed disk-shaped extension (35, 36) in which the guide groove (26, 27) is formed.

12. Operating unit according to one of the claims 1 to 11, characterised in that the first bevel wheel (5) has in the region of its toothed ring in the wheel body (16) a recess (37) into which an overhang (38) of an extension (35) of the second bevel wheel (6) extends.

13. Operating unit according to one of the claims 1 to 12, characterised in that the turning knob (3, 4) is connected with the first bevel wheel (5, 7) by means of a snap-in connection.

14. Operating unit according to claim 1, characterised in that the first bevel wheel (7), with the exception of a region in which the teeth of the first bevel wheel (7) are engaged with the teeth of the second bevel wheel (8), is surrounded on the periphery by individual light guides (40) which issue from a luminous centre (39) and the ends of which, arranged in a circle around the turning knob (3), are visible in the front panel (2).

15. Operating unit according to claim 14, characterised in that at least one light guide is conducted from the luminous centre (39) to a further turning knob.

16. Operating unit according to one of the claims 1 to 15, characterised in that the plate-like support element (9) has a recess (42, 43) within which the adjusting lever (11, 12) may be swung.

17. Operating unit according to one of the claims 1 to 16, characterised in that the wheel body (17, 19) of the second bevel wheel (6, 8) lies with its lower extension (36) on the plate-like support element (9).

18. Operating unit according to one of the claims 1 to 17, characterised in that the pivot bearing for the adjusting lever (10) coordinated with the guide groove (26) in the upper extension (35) is located in a retaining clamp secured to the front panel (2) on the rear side.

19. Operating unit according to one of the claims 1 to 11, 13, 16, 17, characterised in that the bevel gearing consists of a first driving bevel wheel (66) and several second driven bevel wheels (67, 68, 69).

## Revendications

1. Ensemble de manoeuvre pour réglage d'installations de chauffage, climatisation et/ou ventilation d'automobiles, comportant un châssis (1) insérable dans un tableau de bord et composé :
- d'une platine (2), dans laquelle est tourillonné au moins un bouton rotatif (3,4) à l'aide duquel il est possible de faire tourner un premier pignon conique menant (5,7) d'un train d'engrenages composé d'au moins deux pignons coniques (5,6,7) à axes de rotation mutuellement perpendiculaires, et
- d'un élément (9) de support postérieur, dans lequel le second pignon conique (6,8) mené est tourillonné, ce second pignon conique (6,8) coopérant, de façon à l'entraîner, avec un levier (10,11,12) de réglage pouvant pivoter d'un angle limité dans un palier de châssis (1) et destiné à actionner des câbles Bowden (13,14,15), ensemble caractérisé en ce que
le corps (17,19) du second pignon conique (6,8) comporte au moins deux éléments de guidage destinés à manoeuvrer, par entraînement, chacun un levier (10,11,12) de réglage, l'un au moins de ces éléments étant une gorge-guide (26,27,28) formée dans le corps de pignon (17,19), chacun de ces leviers (10, 11, 12) comportant un goujon (23, 24, 25) de guidage qui coopère avec cette gorge (26, 27, 28), et l'axe de pivotement dudit levier (10, 11, 12) se trouvant à une certaine distance de l'axe de rotation du second pignon (6,8) et en ce que les éléments de guidage et les leviers (10, 11, 12) de réglage sont agencés de manière que, lors de la rotation du bouton rotatif (3, 4), le second pignon conique (6,8) entraîne les câbles Bowden (13, 14, 15) sur des trajets différents, indépendants l'un de l'autre et en ce que l'une des gorges-guides (26, 27, 28) est prévue des deux côtés du corps de pignon.

2. Ensemble de manoeuvre selon la revendication 1, caractérisé en ce que chaque levier (10,11,12) de réglage est un levier à un seul bras, que son pivot (20,21,22) tourillonne à une extrémité dans le palier du châssis (1), qui porte à son autre extrémité libre le câble Bowden (13, 14, 15) qui y est accroché, et qui comporte un goujon (23, 24, 25) intermédiaire de guidage.

3. Ensemble de manoeuvre selon l'une des revendications 1 et 2, caractérisé en ce que
chaque levier (10, 11, 12) de réglage comporte au moins deux bras (29 à 34), qui font entre eux un certain angle.

4. Ensemble de manoeuvre selon la revendication 3, caractérisé en ce que l'angle est un angle obtus.

5. Ensemble de manoeuvre selon la revendication 3, caractérisé en ce que l'angle est sensiblement droit.

6. Ensemble de manoeuvre selon la revendication 3, caractérisé en ce que le pivot (20, 21, 22) et le goujon (23, 24, 25) de guidage se trouvent sur le même bras (29, 31, 33).

7. Ensemble de manoeuvre selon la revendication 1, caractérisé en ce que le goujon (23, 24, 25) de guidage du levier (10, 11, 12) de réglage est logé à ajustage glissant dans une gorge-guide (26, 27, 28).

8. Ensemble de manoeuvre selon la revendication 7, caractérisé en ce que la gorge-guide (26, 27) est refermée sur elle-même.

9. Ensemble de manoeuvre selon la revendication 8, caractérisé en ce que la gorge-guide (26, 27) se trouve à une distance radiale variable de l'axe de rotation du second pignon conique (6, 8).

10. Ensemble de manoeuvre selon la revendication 7, caractérisé en ce que la gorge-guide (28) n'est pas fermée et comporte de chaque côté une butée.

11. Ensemble de manoeuvre selon la revendication 7, caractérisé en ce que le corps (17) du second pignon conique (6) comporte d'un côté, ou des deux côtés, un prolongement (35, 36) en forme de disque, qui y est formé et dans lequel la gorge-guide (26, 27) est creusée.

12. Ensemble de manoeuvre selon l'une des revendications 1 à 11, caractérisé en ce que le premier pignon conique (5) comporte près de la couronne dentée de son corps (16) un renfoncement (37) dans lequel pénètre une partie en saillie (38) d'un prolongement (35) du second pignon conique (6).

13. Ensemble de manoeuvre selon l'une des revendications 1 à 12, caractérisé en ce que le bouton rotatif (3, 4) est relié au premier pignon conique (5, 7) par assemblage à déclic.

14. Ensemble de manoeuvre selon la revendication 1, caractérisé en ce que le premier pignon conique (7) est entouré, jusqu'à l'emplacement où ses dents engrènent avec celles du second pignon conique (8), par des guides (40) individuels de lumière, ou fibres optiques, qui partent d'un centre (39) d'éclairement et dont les extrémités disposées circulairement autour du bouton rotatif (3) sont visibles dans la platine avant (2).

15. Ensemble de manoeuvre selon la revendication 14, caractérisé en ce qu'au moins un guide (40) de lumière, partant du centre (39) d'éclairement, va à un autre bouton rotatif.

16. Ensemble de manoeuvre selon l'une des revendications 1 à 15, caractérisé en ce que l'élément (9) de support en forme de plateau comporte un évidement (42, 43), dans lequel le levier (11, 12) de réglage peut pivoter.

17. Ensemble de manoeuvre selon l'une des revendications 1 à 16, caractérisé en ce que le corps (17, 19) du second pignon conique (6,8) repose, par son prolongement (36) inférieur, sur l'élément (9) de support en forme de plateau.

18. Ensemble de manoeuvre selon l'une des revendications 1 à 17, caractérisé en ce que le palier du levier (10) de réglage, qui coopère avec la gorge-guide (26) du prolongement (35) supérieur, se trouve dans un bras fixé à la face postérieure de la platine avant (2).

19. Ensemble de manoeuvre selon l'une des revendications 1 à 11, 13, 16 ou 17, caractérisé en ce que le train d'engrenages est composé d'un premier pignon conique (66) menant et de plusieurs seconds pignons coniques (67, 68, 69) menés.
